# EUROPÄISCHE PATENTSCHRIFT

(11) **EP 1 144 903 B1**
(45) Veröffentlichungstag und Bekanntmachung des Hinweises auf die Patenterteilung: **27.10.2004**
(21) Anmeldenummer: 00901059.6
(22) Anmeldetag: 05.01.2000
(51) Int. Cl.: F16N 7/38

(54) **SCHMIERÖLUMLAUFANLAGE**
LUBRICATING OIL CIRCULATING DEVICE
DISPOSITIF DE CIRCULATION D'HUILE DE GRAISSAGE

(30) Priorität: 09.01.1999 DE 19900560
(43) Veröffentlichungstag der Anmeldung: 17.10.2001
(73) Patentinhaber: SMS Demag AG, 40237 Düsseldorf (DE)
(72) Erfinder: OHRNDORF, Henning, D-57572 Niederfischbach (DE); TAKE, Hermann, D-57271 Hilchenbach (DE); SCHIMION, Werner, D-57271 Hilchenbach (DE)
(74) Vertreter: Valentin, Ekkehard, Dipl.-Ing.
(86) Internationale Anmeldenummer: PCT/EP2000/000026
(87) Internationale Veröffentlichungsnummer: WO 2000/042347

(56) Entgegenhaltungen:
- EP-A- 0 715 118
- EP-A- 0 838 640
- WO-A-94/08174
- WO-A-98/37356
- DE-A- 4 027 401

## Beschreibung

Die Erfindung betrifft eine Schmierölumlaufanlage zur Versorgung von Reibstellen mit Schmieröl, umfassend das Schmieröl verfahrenstechnisch behandelnde Anlagenkomponenten, nämlich einen Ölsammelbehälter, Pumpen, Filter, Wärmeaustauscher zur Heizung und zur Kühlung, Mess- und Regeltechnik sowie mit den Reibstellen verbundene Speise- und Rücklaufleitungen. Eine solche Schmierölumlaufanlage ist durch die WO-A-98 37 356 bekannt geworden.

Die vorstehenden Hauptkomponenten verfahrenstechnischer Schmieröl-Umlaufsysteme sind üblicherweise in Kellerlokalen und Rohrkanälen bzw. -leitungen unterhalb des Hüttenflurs installiert. Aus diesen Unterflur-Bereichen wird das Schmieröl mittels Pumpen unter Druck den geodätisch höher gelegenen Reibstellen zugefördert. Nach erfolgter Schmieraufgabe fließt das Schmieröl gravitär durch ein Rücklaufleitungssystem zum tiefer gelegenen Ölsammelbehälter zurück. Die Unterflur- bzw. Keller-Installation erfordert zusätzliche teure Fundament- und Baumaßnahmen für die erforderlichen Ölkeller.

Der Erfindung liegt die Aufgabe zugrunde, ein gattungsgemäßes Schmieröl-Umlaufsystem zu schaffen, das eine optimale Schmiermittelversorgung mit hoher Anlagenverfügbarkeit sowie -sicherheit und dennoch niedrigen Anlagen- und Bauaufwand ermöglicht.

Diese Aufgabe wird erfindungsgemäß dadurch gelöst, dass die Schmierölumlaufanlage auf Hüttenflur angeordnet und mit einer mindestens einen der Schmiermittelversorgung dienenden Vakuumöltank aufweisenden Vakuum-Ölrückförderung ausgebildet ist. Es lässt sich somit eine kellerfreie Schmierölumlaufanlage erreichen die sich komplett auf dem Hüttenflur befindet. Alle vorhandenen Reibstellen lassen sich hierbei zentral, d. h. ohne jeweils eine separate Versorgung zu erfordern, mit Schmieröl versorgen. Statt eines gravitären Ölrücklaufes gewährleistet das Vakuum die Ölrückförderung und damit den SchmiermittelKreislauf vom Ölsammelbehälter zu den Verbrauchern bzw. Reibstellen und zurück.

Eine Ausführung sieht vor, daß geodätisch oberhalb des Ölsammelbehälters eine Vakuum-Erzeugngsanlage angeordnet ist, die vorzugsweise zwei sich im Wechselbetrieb mit Schmieröl füllende bzw. entleerende Öltanks aufweist. Die beiden mit dem Ölsammelbehälter verbundenen Öltanks gewährleisten durch ihren Wechselbetrieb, bei dem die Entleerung des einen Behälters schneller als die Füllung des anderen Behälters vorgenommen wird, daß es zu keiner Unterbrechung des Förderstroms kommt. Zur Aufrechterhaltung bzw. Einstellung des Vakuums sind die beiden Öltanks an ein gemeinsames Vakuumaggregat, z.B. eine Saugeinheit, angeschlossen und über ein an eine übergeordnete Steuerung angeschlossenes Regelventil zum Wechselbetrieb umschaltbar.

Bei einer anderen Ausführung besteht die Vakuum-Erzeugungsanlage aus einem einzelnen Ölsammelbehälter, an den ein kontinuierlich ein Vakuum bewirkendes Vakuumaggregat und eine Förderpumpe angeschlossen sind. Der Ölsammelbehälter wird in diesem Fall zugleich als Vakuumbehälter genutzt, d.h. die beiden im Wechselbetrieb arbeitenden Vakuum-Öltanks der vorbeschriebenen Variante können entfallen. Das vorteilhaft ebenso wie die Förderpumpe regelbare Vakuumaggregat hält hierbei das kontinuierlich auf den Ölsammelbehälter wirkende Vakuum aufrecht, während die geregelte Förderpumpe den konstanten Speisedruck in der Rohrleitung regelt.

Nach einer Ausgestaltung der Erfindung wird für den unter Vakuum gesetzten Ölsammelbehälter eine Förderpumpe eingesetzt, die eine kleinstmögliche Haltedruckhöhe besitzt. Diese Maßnahme begünstigt es, das Schmieröl von der Druck- auf die Saug- bzw. Pumpenseite zu bringen. Die erforderliche Haltedruckhöhe, der sogenannte NPSH-Wert, ist die für eine Pumpe bei einer bestimmten Drehzahl, einem bestimmten Förderstrom und einer bestimmten Förderflüssigkeit zur Beschränkung der Kavitation auf das jeweils zugelassene Ausmaß mindestens erforderliche Netto-Energiehöhe im Eintrittsquerschnitt der Pumpe.

Bei einer weiteren Ausführung besteht die Vakuum-Erzeugungsanlage aus einer selbstansaugenden, für Trockenlauf geeigneten Pumpstation, die zwischen den beiden entferntesten Reibstellen angeordnet ist.

Für die Pumpstation werden vorzugsweise Pumpen mit hohem Saugvermögen eingesetzt. Als selbstansaugende Pumpen zur Ölrückförderung eignen sich bspw. Kolbenpumpen, Membranpumpen und spezielle Schraubenspindelpumpen.

Nach einer bevorzugten Ausgestaltung der Erfindung ist der Reibstelle ein an die Rücklaufleitung angeschlossener, mit der Atmosphäre verbundener Schmieröl-Aufnahmebehälter mit einer Niveauregelung zugeordnet, dessen Schmieröl-Einlauf oberhalb des Schmieröl-Ablaufs liegt. Es läßt sich damit eine Vorentgasung des Schmieröls in dem Aufnahmebehälter erreichen, und zwar auf der kurzen Gefällestrecke vom Einlauf zum Ablauf. Die integrierte Niveauregelung, die über ein Regelventil mit der Vakuum-Rücklaufleitung verbunden ist, verhindert, daß das Vakuum in den Aufnahmebehälter schießt, weil sich der Pegel bzw. Schmierölstand in dem Behälter entsprechend einstellen und halten läßt.

Allen Ausführungen ist gemeinsam, daß sie mit einer auf Hüttenflur angeordneten Zentrale auskommen, die grundsätzlich einen Vakuumbetrieb ermöglicht und sich kellerfrei anordnen läßt, so daß aufwendige Tiefbauarbeiten entfallen. Die Anlagenverfügbarkeit und -sicherheit sind größer und die Wartungskosten geringer, weil sämtliche Aggregate sofort zugänglich sind. Gleichzeitig wird eine Optimierung bei der Reibstellenversorgung und der Schmierstoffentgasung erreicht, wobei gegenüber bisherigen Umlaufsystemen kleinere Schmierölsammelbehälter eingesetzt werden können.

Weitere Merkmale und Vorteile der Erfindung ergeben sich aus den Patentansprüchen und der nachfolgenden Beschreibung, in der Ausführungsbeispiele des Gegenstandes der Erfindung näher erläutert sind. Es zeigen:
- Figur 1: in perspektivischer Draufsicht eine Ausführung eines Schmierölumlaufsystems mit einer auf Hüttenflur angeordneten, zwei im Wechselbetrieb arbeitende Öltanks aufweisende Vakuum-Erzeugungsanlage;
- Figur 2: in perspektivischer Draufsicht eine auf Hüttenflur angeordnete Schmierölumlaufanlage mit einer selbstansaugenden Pumpstation;
- Figur 3: als Einzelheit eines Schmierölumlaufsystems einen auf Hüttenflur angeordneten Ölsammelbehälter, an den ein Vakuum angelegt ist.

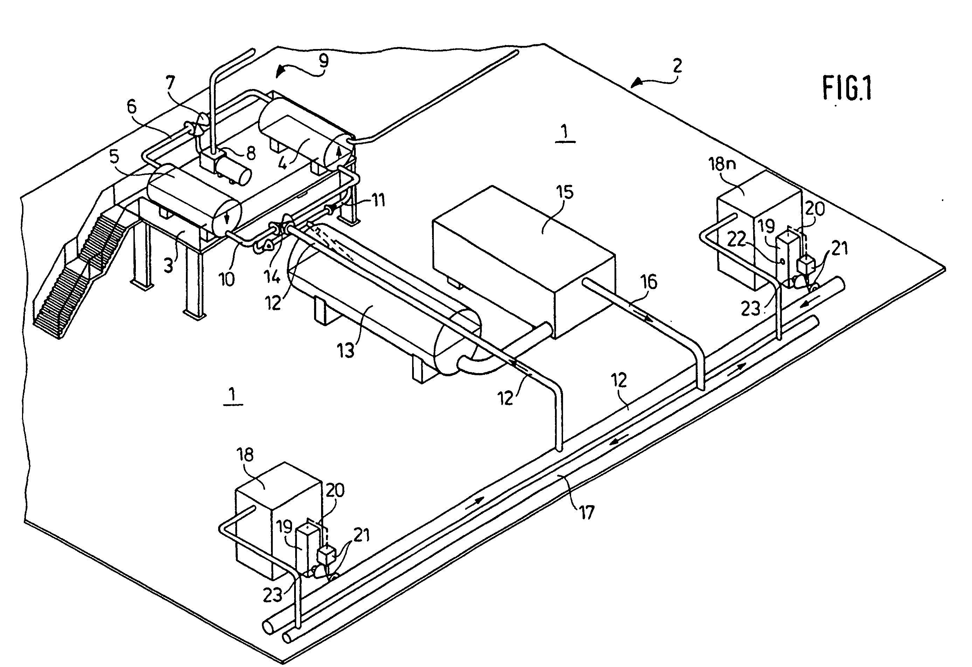

Eine in Fig. 1 gezeigte, auf dem Hüttenflur 1 angeordnete Schmierölumlaufanlage 2 weist auf einer Bühne 3 zwei Öltanks 4 bzw. 5 auf, die einerseits über eine sie miteinander verbindende Rohrleitung 6 an ein durch ein Dreiwegeventil 7 zuschaltbares Vakuumaggregat 8 angeschlossen sind und mit diesem eine Vakuum-Erzeugungsanlage 9 zur Vakuum-Olrückförderung bilden. Zu diesem Zweck sind die beiden Öltanks 4, 5 andererseits über sie gemeinsam verbindende Rohrleitungen 10 bzw. 11 an eine Rücklaufleitung 12 bzw. einen geodätisch unterhalb der Vakuum- bzw. Erzeugungsanlage 9 liegenden Ölsammelbehälter 13 angeschlossen.

Die an die Rücklaufleitung 12 angeschlossene Rohrleitung 10 besitzt ein integriertes Dreiwegeventil 14, das eine Arbeitsweise der beiden Vakuum-Öltanks 4 bzw. 5 im Wechselbetrieb erlaubt. Das bspw. aus dem Vakuumöltank 5 in den Ölsammelbehälter 13 eingeleitete Schmieröl wird von einem Kompaktaggregat bzw. einer Pumpstation 15 über ein Anschlußrohr 16 in die Speiseleitung 17 und von dort zu den Verbrauchern bzw. Reibstellen 18 bis 18n - von denen in Fig. 1 lediglich die erste und letzte Reibstelle 18 bzw. 18n gezeigt sind - gefördert. Gleichzeitig wird das nach Erfüllung seiner Schmieraufgabe von den Reibstellen 18 bis 18n über die Rücklaufleitung 12 mit der Vakuum-Ölrückförderung im Kreislauf zurückgeführte Schmieröl aufgrund des entsprechend umgesteuerten Dreiwegeventils 14 in den Vakuumöltank 4 eingeleitet. Sobald der Vakuumöltank 5 geleert ist, wird das Ventil 14 umgesteuert, und die Schmiermittelversorgung aus dem Vakuumöltank 4 sichergestellt, der sich während dieser Zeit gefüllt hat; das über die Rücklaufleitung 12 zurückströmende Schmieröl füllt nunmehr den zuvor geleerten Öltank 5 auf.

Jeder Reibstelle 18 bis 18n ist ein an die Rücklaufleitung 12 angeschlossener Schmieröl-Aufnahmebehälter 19 zugeordnet, der mit der Atmosphäre verbunden und mit einer Niveauregelung 20 ausgestattet ist. Diese ist über ein Regelventil 21 an die Rücklaufleitung 12 angeschlossen. Die Niveauregelung 20 mit dem Regelventil 21 ermöglicht es, den Pegel des sich in dem Aufnahmebehälter 19 ansammelnden Schmieröls auf einem solchen Niveau zu halten, daß ein Ausbreiten des Vakuums in den Aufnahmebehälter 19 verhindert wird. Die Reibstellen 18 bis 18n gehen mit einem für die Reibstelle 18n schematisch eingezeichneten Schmieröl-Einlauf 22 in den Aufnahmebehälter 19 über, wobei der Einlauf 22 oberhalb des Schmieröl-Ablaufs 23 liegt, so daß sich für das aus der Reibstelle 18 bis 18n abströmende Schmieröl in dem Aufnahmebehälter 19 bis zum tiefer liegenden Ablauf 23 eine Gefällestrecke ergibt, was eine Vorentgasung des Schmieröls ermöglicht, da eingeschlossenes Gas in die freie Atmosphäre entweichen kann.

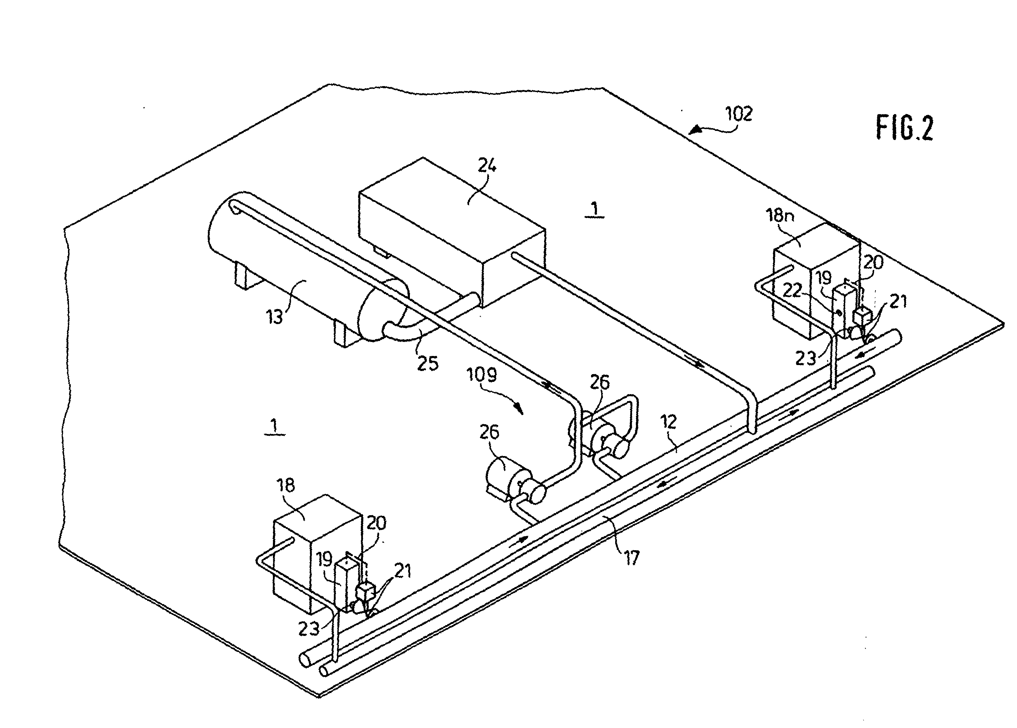

Die Schmierölumlaufanlage 102 nach Fig. 2 ist mit einer auf dem Hüttenflur angeordneten Ölrückförderung 109 in Form einer Pumpstation ausgebildet, die selbstansaugende Pumpen 26 mit hohem Saugvermögen aufweist. Diese sind einerseits an die von den Reibstellen 18 bis 18n kommende Rücklaufleitung 12 und andererseits an den Ölsammelbehälter 13 angeschlossen, der über einen Rohranschluß 25 mit einem Kompaktaggregat bzw. einer Pumpstation 24 in Verbindung steht. Von den in der Pumpstation 24 integrierten, nicht gezeigten Pumpen wird das zurückgeförderte Schmieröl in die Speiseleitung 17 gefördert. Die Pumpstation 24 erzeugt bedingt durch ihre NPSH Charakteristik ein Teilvakuum, das zur Überwindung des Druckverlustes, gemessen von der entferntesten Reibstelle bis zum Pumpeneintritt, benötigt wird.

Die spezifischen Pumpenelemente erzeugen die zur Weiterförderung erforderliche Druckhöhe. Der Übergang von den Reibstellen 18 bis 18n zur Rücklaufleitung 12 mit dem zur Vorentgasung dazwischengeschalteten, mit einer Niveauregelung 20 ausgebildeten Aufnahmebehälter 19 unterscheidet sich nicht von der im Zusammenhang mit Fig. 1 beschriebenen Ausführung.

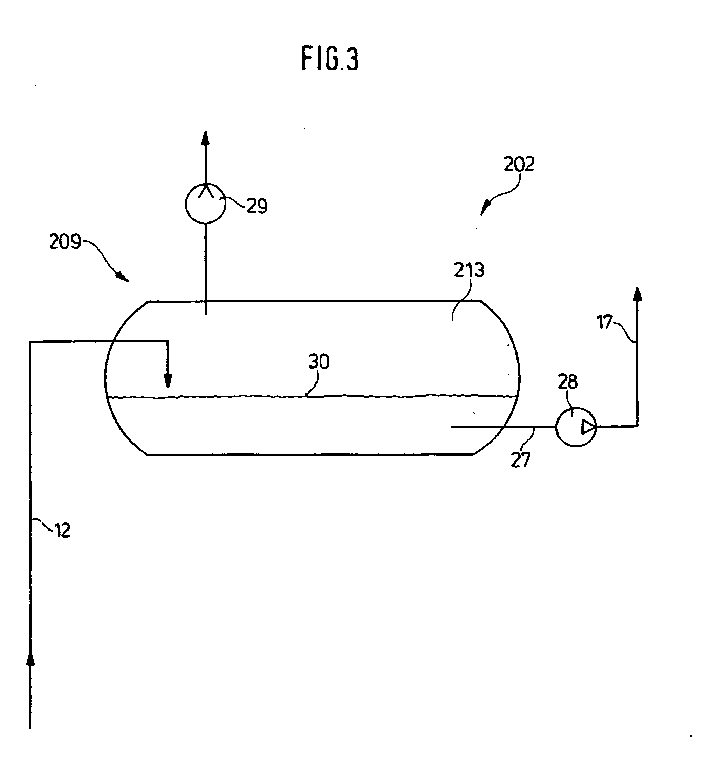

Bei der in Fig. 3 sehr vereinfacht und im Vergleich zu den Fig. 1 und 2 unter Weglassung aller weiteren auf dem Hüttenflur angeordneten Aggregate bzw. Anlagenkomponenten gezeigten Schmierölumlaufanlage 202 wird als Vakuum-Erzeugungsanlage 209 sogleich der vorhandene Ölsammelbehälter 213 genutzt. An diesen ist einerseits die Vakuum-Rücklaufleitung 12 und gegenüberliegend andererseits die in die hier nicht gezeigte Speiseleitung einmündende Verbindungsrohrleitung 27 mit einer darin integrierten, einen extrem kleinen NPSH-Wert besitzenden, geregelten Förderpumpe 28 angeschlossen. Der Ölsammelbehälter 213 ist weiterhin mit einem geregelten Vakuumaggregat 29 ausgerüstet, das ein kontinuierlich auf den Ölsammelbehälter 213 wirkendes Vakuum erzeugt und aufrechterhält, während die geregelte Förderpumpe 28 den konstanten Speisedruck in der Rohrleitung 17 regelt.

## Patentansprüche

1. Schmierölumfaufanlage zur Versorgung von Reibstellen mit Schmieröl, umfassend das Schmieröl verfahrenstechnisch behandelnde Anlagenkomponenten, nämlich einen Ölsammelbehälter (13), Pumpen, Filter, Wärmeaustauscher zur Heizung und Kühlung, Mess- und Regeltechnik sowie mit den Reibstellen (18 bis 18n) verbundene Speise- und Rücklaufleitungen (17, 12),
**dadurch gekennzeichnet,**
**dass** die Schmierölumlaufanlage (2, 102, 202) auf Hüttenflur (1) angeordnet und mit einer mindestens einen der Schmiermittelversorgung dienenden Vakuumöltank (4, 5, 13, 213) aufweisenden Vakuum-Ölrückförderung (9, 109, 209) ausgebildet ist.

2. Schmierölumlaufanlage nach Anspruch 1,
**dadurch gekennzeichnet,**
**dass** geodätisch oberhalb des Ölsammelbehälters (13) eine Vakuum-Erzeugungsanlage (9) angeordnet ist.

3. Schmierölumlaufanlage nach Anspruch 2,
**dadurch gekennzeichnet,**
**dass** die Vakuum-Erzeugungsanlage (9) zwei sich im Wechselbetrieb mit Schmieröl füllende bzw. entleerende Öltanks (4, 5) aufweist.

4. Schmierölumlaufanlage nach Anspruch 1,
**dadurch gekennzeichnet,**
**dass** die Vakuum-Erzeugungsanlage (209) aus einem Ölsammelbehälter (213) besteht, an den ein kontinuierlich ein Vakuum bewirkendes Vakuumaggregat (29) und eine Förderpumpe (28) angeschlossen sind.

5. Schmierölumlaufanlage nach Anspruch 4,
**dadurch gekennzeichnet,**
**dass** das Vakuumaggregat (29) und die Förderpumpe (28) geregelt sind.

6. Schmierölumlaufanlage nach Anspruch 4 oder 5,
**dadurch gekennzeichnet,**
**dass** die Förderpumpe (28) eine kleinstmögliche Haltedruckhöhe besitzt.

7. Schmierölumlaufanlage nach Anspruch 1,
**dadurch gekennzeichnet,**
**dass** die Vakuum-Erzeugungsanlage (109) aus einer selbstansaugenden Pumpstation besteht.

8. Schmierölumlaufanlage nach Anspruch 7,
**dadurch gekennzeichnet,**
**dass** für die Pumpstation Pumpen (26) mit hohem Saugvermögen eingesetzt sind.

9. Schmierölumlaufanlage nach einem der Ansprüche 1 bis 8,
**dadurch gekennzeichnet,**
**dass** der Reibstelle (18 bis 18n) ein an die Rücklaufleitung (12) angeschlossener, mit der Atmosphäre verbundener Schmieröl-Aufnahmebehälter (19) mit einer Niveauregelung (20) zugeordnet ist, dessen Schmieröl-Einlauf (22) oberhalb des Schmieröl-Ablaufs (23) liegt.

## Claims

1. Lubricating oil circulating plant for the supply of friction locations with lubricating oil, comprising plant components handling the oil in terms of process, namely an oil collecting container (13), pumps, filter, heat exchanger for heating and cooling, measuring and regulating means as well as supply and return lines (17, 12) connected with the friction locations (18 to 18n), **characterised in that** the lubricating oil circulating plant (2, 102, 202) is arranged at mill floor level (1) and is constructed with a vacuum oil return conveying means (9, 109, 209) having at least one vacuum oil tank (4, 5, 13, 213) serving for lubricant supply.

2. Lubricating oil circulating plant according to claim 1, **characterised in that** a vacuum generating plant (9) is arranged geodetically above the oil collecting container (13).

3. Lubricating oil circulating plant according to claim 2, **characterised in that** the vacuum generating plant (9) comprises two oil tanks (4, 5) filling with and emptying of lubricating oil in alternating operation.

4. Lubricating oil circulating plant according to claim 1, **characterised in that** the vacuum generating plant (209) consists of an oil collecting container (213), with which a vacuum unit (29) continuously producing a vacuum and a conveying pump (29) are connected.

5. Lubricating oil circulating plant according to claim 4, **characterised in that** the vacuum unit (29) and the conveying pump (28) are regulated.

6. Lubricating oil circulating plant according to claim 4 or 5, **characterised in that** the conveying pump (29) has a smallest possible holding pressure level.

7. Lubricating oil circulating plant according to claim 1, **characterised in that** the vacuum generating plant (109) consists of a self-priming pumping station.

8. Lubricating oil circulating plant according to claim 7, **characterised in that** pumps (26) with a high suction capability are used for the pumping station.

9. Lubricating oil circulating plant according to one of claims 1 to 8, **characterised in that** the friction locations (18 to 18n) are associated with a lubricating oil receiving container (19), which is coupled with the return line (12) and connected with the atmosphere, with a level regulation (20), the lubricating oil inlet (22) of the lubricating oil receiving container being disposed above the lubricating oil outlet (23).

## Revendications

1. Installation de circulation d'huile lubrifiante pour alimenter des endroits de friction en huile lubrifiante, comprenant les composants d'installation traitant l'huile lubrifiante en technique de procédé, à savoir un collecteur d'huile (13), des pompes, des filtres, un échangeur de chaleur pour le chauffage et le refroidissement, une technique de mesure et de régulation ainsi que des conduites (17, 12) d'alimentation et de retour raccordées aux endroits de friction (18 à 18n), **caractérisée en ce que** l'installation de circulation d'huile lubrifiante (2, 102, 202) est disposée au niveau du sol (1) de l'usine et est réalisée avec au moins une conduite de retour (9, 109, 209) d'huile sous vide présentant au moins un réservoir (4, 5, 13, 213) d'huile sous vide servant à l'alimentation en lubrifiant.

2. Installation de circulation d'huile lubrifiante selon la revendication 1, **caractérisée en ce qu'**une installation (9) de production de vide est disposée de manière géodésique au-dessus du collecteur d'huile (13).

3. Installation de circulation d'huile lubrifiante selon la revendication 2, **caractérisée en ce que** l'installation (9) de production du vide présente deux réservoirs d'huile (4, 5) qui se remplissent d'huile lubrifiante ou se vident alternativement.

4. Installation de circulation d'huile lubrifiante selon la revendication 1, **caractérisée en ce que** l'installation (209) de production de vide est constituée par un collecteur d'huile (213) auquel sont raccordés un appareil de vide (29) réalisant un vide continu et une pompe (28) d'alimentation.

5. Installation de circulation d'huile lubrifiante selon la revendication 4, **caractérisée en ce que** l'appareil (29) de vide et la pompe (28) d'alimentation sont régulés.

6. Installation de circulation d'huile lubrifiante selon la revendication 4 ou 5, **caractérisée en ce que** la pompe (28) d'alimentation présente une hauteur manométrique de maintien la plus petite possible;

7. Installation de circulation d'huile lubrifiante selon la revendication 1, **caractérisée en ce que** l'installation (109) de production de vide est constituée par un poste de pompage auto-amorçant.

8. Installation de circulation d'huile lubrifiante selon la revendication 7, **caractérisée en ce qu'**on a utilisé pour le poste de pompage des pompes (26) présentant un débit volumétrique élevé.

9. Installation de circulation d'huile lubrifiante selon l'une quelconque des revendications 1 à 8, **caractérisée en ce que** les endroits de friction (18 à 18n) sont associés à un récipient de réception (18) d'huile lubrifiante raccordé à la conduite de retour (12), raccordé à l'atmosphère, présentant une régulation de niveau, dont l'alimentation (22) en huile lubrifiante se situe au-dessus de la sortie (23) d'huile lubrifiante.
